# FASCICULE DE BREVET EUROPEEN

(11) **EP 3 510 864 B1**
(45) Date de publication et mention de la délivrance du brevet: **14.07.2021**
(21) Numéro de dépôt: 19305016.8
(22) Date de dépôt: 07.01.2019
(51) Int. Cl.: A01M 29/34, A01G 7/06

(54) **PROCÉDÉ DE TRAITEMENT CONTRE LES LARVES DE CICADELLES**
BEHANDLUNGSVERFAHREN GEGEN DIE LARVEN VON ZWERGZIKADEN
TREATMENT METHOD AGAINST PLANTHOPPER LARVA

(30) Priorité: 10.01.2018 FR 1850207
(43) Date de publication de la demande: 17.07.2019
(73) Titulaire: Université de Bourgogne, 21078 Dijon (FR); Centre National de la Recherche Scientifique - CNRS, 75016 Paris (FR)
(72) Inventeur: ANSTETT, Marie-Charlotte, 21000 DIJON (FR)
(74) Mandataire: Jacobacci Coralis Harle

(56) Documents cités:
- EP-A1- 2 638 801
- EP-A2- 3 187 038
- JP-A- 2016 021 903
- KR-B1- 101 641 924
- Julien Chuche ET AL: "Biologie et écologie de Scaphoideus titanus, cicadelle vectrice de la flavescence dorée", , 31 décembre 2014 (2014-12-31), XP055497809, Extrait de l'Internet: URL:https://www6.bordeaux-aquitaine.inra.f r/sante-agroecologie-vignoble/content/down load/4660/42052/version/1/file/2014-ASCL#6 _Chuche_Phytoma.pdf [extrait le 2018-08-07]

## Description

La présente invention a attrait à un procédé de traitement d'un végétal, pour empêcher l'émergence à travers son écorce, de larves présentes entre son écorce et le bois. Par écorce on entend ici le rhytidome de la plante. La présente invention concerne plus particulièrement un procédé de traitement d'un plant de vigne, notamment contre la maladie de la Flavescence Dorée.

### ARRIERE-PLAN TECHNOLOGIQUE

Certains insectes phytophages ont la particularité de pondre leurs œufs dans le liège de la plante, entre son écorce et son bois, et plus particulièrement entre le phellogène et le rhytidome, afin d'offrir à leurs œufs un abri contre les prédateurs et les conditions climatiques. Une fois éclos, les larves émergent à travers les interstices de l'écorce pour atteindre le feuillage et s'alimenter.

Certains de ces insectes sont porteurs de maladies pouvant nuire à leur hôte. C'est notamment le cas des cicadelles *Scaphoideus titanus* qui transmettent aux plants de vigne la maladie de la Flavescence Dorée, une maladie à l'origine de pertes de récoltes importantes par mortalité importante des plantes et arrachages obligatoires en cas d'infestation importante

Pour lutter contre cette maladie, il est préconisé l'arrachage et la destruction par le feu des plants de vigne contaminés ou, lorsque cela est encore possible, la destruction des larves par l'emploi d'insecticide. Dans ce cas, un produit phytosanitaire est répandu sur les feuilles des vignes afin de détruire les larves qui y sont présentes. Avant l'émergence des larves à la surface de l'écorce des végétaux, aucun traitement chimique ne permet de lutter efficacement contre les cicadelles. En effet, comme mentionné ci-dessus, l'écorce forme une protection naturelle contre les intempéries, mais également contre les traitements phytosanitaires ce qui empêche une action sur les larves avant leur sortie de l'écorce. Une fois les insectes, larves ou adultes, en dehors de l'écorce, ils sont sensibles aux insecticides. Toutefois, l'émergence de ces insectes dure plusieurs mois ce qui nécessite un renouvellement des traitements insecticides au cours de la même saison.

Selon un autre inconvénient, une quantité importante d'insecticide doit être pulvérisée pour traiter le feuillage de chaque végétal. Or, une partie du traitement peut être disséminée dans l'environnement de façon non contrôlée. C'est notamment pour cette raison que l'épandage d'insecticides est controversé, car il détruit également les insectes auxiliaires et présente un risque sanitaire avéré pour la faune sauvage et la santé humaine. Selon un autre inconvénient, l'utilisation des insecticides les plus efficaces en termes de mortalité d'insectes ne sont pas compatibles avec les exigences des cultures certifiées biologiques. Or, les traitements actuellement préconisés en agriculture biologique présentent une efficacité relative et fluctuante.

Le document KR 101 641 924 B1 décrit un procédé de traitement d'un végétal à travers son écorce, mettant en œuvre une première étape consistant à transpercer l'écorce à l'aide de pointes montées sur un marteau. Lors d'une deuxième étape, il est appliqué sur l'écorce une couche liquide dite de « contrôle », de manière à remplir les passages réalisés par les pointes du marteau à travers l'écorce. Lors d'une troisième étape, une couche à base de polymère est appliquée sur la couche liquide de contrôle. La couche se caractérise par une certaine viscosité afin de permettre par la suite le maintien d'une couche adhésive déposée contre la couche, lors d'une quatrième étape. La viscosité de la couche permet également d'empêcher la diffusion de substances chimiques depuis la couche adhésive vers l'écorce. La fonction de la couche adhésive est d'uniformiser autour de l'écorce du végétal, l'épaisseur de l'empilement de couches.

La présente invention vise à répondre aux problématiques mentionnées ci-dessus, en proposant un procédé de traitement d'un végétal pour empêcher l'émergence de larves à travers son écorce, plus simple à mettre en œuvre et plus efficace.

### OBJET DE L'INVENTION

Pour cela, la présente invention propose un procédé de traitement d'un végétal pour empêcher l'émergence de larves à travers l'écorce du végétal, mettant en œuvre une étape d'application d'une couche visqueuse à la surface de l'écorce du végétal, de manière à obturer au moins un passage traversant de part en part l'écorce.

Selon une variante de réalisation de l'invention, la couche visqueuse a une viscosité dynamique comprise entre 15x10⁴ mPa.s et 40x10⁴ mPa.s, à une température de 20°C et une pression de 1 Atmosphère.

Selon une autre variante de réalisation de l'invention, la couche visqueuse a une pégosité (ou tack) suffisante pour permettre son adhérence au bois de l'arbre à traiter par quelque moyen d'application que ce soit.

Selon une autre variante de réalisation de l'invention, la couche visqueuse est appliquée de manière à ce que son épaisseur à la surface de l'écorce, est comprise entre 0.05 mm et 2 mm, de préférence entre 0.1 mm et 1 mm.

Selon une autre variante de réalisation de l'invention, la couche visqueuse est pulvérisée sur l'écorce du végétal.

Selon une autre variante de réalisation de l'invention, la couche visqueuse est appliquée contre l'écorce, à une température comprise entre 5°C et 50°C, de préférence entre 10°C et 40°C.

Selon une autre variante de réalisation de l'invention, le procédé de traitement comprend une étape d'application de la couche visqueuse sur une écorce dont l'âge est compris entre un et quatre ans, de préférence entre deux et trois ans

Selon une autre variante de réalisation de l'invention, la couche visqueuse est appliquée après une étape de taille du végétal.

Selon une autre variante de réalisation de l'invention, la couche visqueuse est appliquée entre les périodes de ponte et d'éclosion d'une larve sous l'écorce du végétal.

Selon une autre variante de réalisation de l'invention, le procédé de traitement est mis en œuvre pour éliminer les larves de cicadelle *Scaphoideus titanus.*

Selon une autre variante de réalisation de l'invention, le procédé de traitement est mis en œuvre sur au moins un plant de vigne.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

### DESCRIPTION DES FIGURES

La description qui va suivre en regard des dessins annexés suivants, donnés à titre d'exemples non limitatifs, permettra de mieux comprendre en quoi consiste l'invention et comment elle peut être réalisée :
- la figure 1 représente une vue de schématique d'un plant de vigne sur lequel est appliqué, une première année, le procédé de traitement selon l'invention ;
- la figure 1A représente une coupe transversale d'un rameau du plant de vigne illustré à la figure 1, selon le plan de coupe AA' indiqué sur la figure 1 ;
- la figure 2 représente une vue schématique du plant de vigne illustré à la figure 1, une année suivante, sur lequel est appliqué le procédé de traitement selon l'invention ;
- la figure 3 représente une vue schématique du plant de vigne illustré à la figure 2, une année suivante, sur lequel est appliqué le procédé de traitement selon l'invention.

### DESCRIPTION DETAILLEE D'UN EXEMPLE DE REALISATION

Pour rappel, l'invention propose un procédé de traitement d'un végétal pour empêcher l'émergence de larves à travers son écorce, procédé de traitement plus simple à mettre en œuvre et plus efficace.

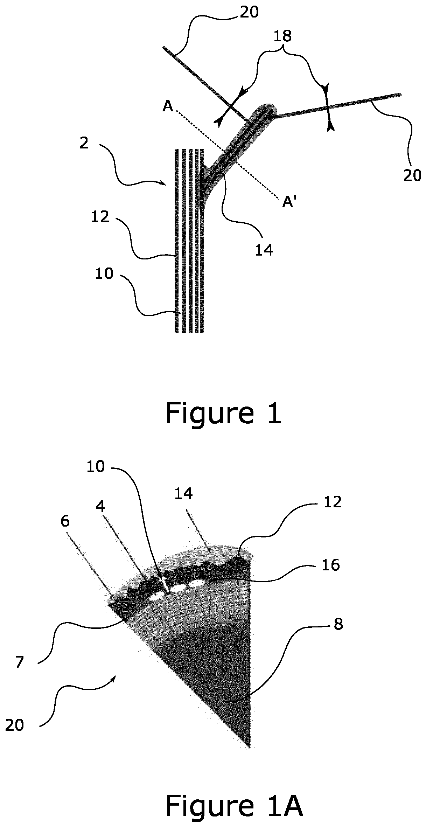

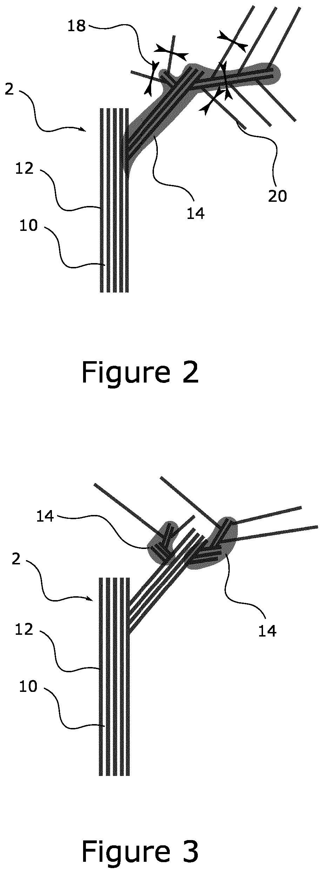

Les figures 1 à 3 illustrent un exemple non limitatif de mise œuvre de l'invention, sur un même plant de vigne 2 pendant trois années successives, afin de lutter contre les cicadelles et plus particulièrement contre les cicadelles *Scaphoideus titanus.*

Comme illustré par la figure 1A, les cicadelles mettent à l'abri leurs œufs 4 sous l'écorce 6 des plants de vigne, en pondant à la fin de chaque été au sein du liège 7, c'est-à-dire entre le bois 8, et le rhytidome 6, plus particulièrement entre le phellogène et le rhytidome plus généralement appelé écorce. Une fois les œufs éclos, les larves passent à travers les fentes 10, passages ou interstices de l'écorce ou rhytidome 6, pour atteindre la surface 12 de l'écorce. Selon l'invention, une couche visqueuse 14 est appliquée à la surface 12 de l'écorce 6, au niveau des sites de pontes 16, de manière à obturer les fentes 10 par lesquelles les larves de cicadelles sont susceptibles de passer pour atteindre la surface de l'écorce 6.

Les sites de ponte 16 des œufs de cicadelles sont localisés sous les parties de l'écorce 6 des bois de vigne qui sont relativement jeunes, c'est-à-dire, dont l'âge est de l'ordre de quelques années et plus précisément entre deux ans et trois ans. Il est à noter que les zones de cicatrisation ou de pampres taillés sur du bois même très âgé peuvent aussi être des sites potentiels de ponte. De ce fait, la couche visqueuse peut également être appliquée sur ce type de zones non représentées sur les figures.

Au printemps, les jeunes larves éclosent sous l'écorce 6 du plant de vigne, peu après l'apparition des premières feuilles de vigne. En France métropolitaine, la période d'éclosion des œufs est comprise entre fin avril et fin mai, selon la région et les conditions météorologiques. Les larves n'ont aucun moyen pour creuser l'écorce 6, elles doivent donc trouver une fente 10 à travers l'écorce pour émerger à la surface 12 de celle-ci. Or, les jeunes larves sont particulièrement fragiles à ce stade de croissance, puisqu'elles ont épuisé leurs réserves nutritives durant l'hiver.

La présente invention propose un procédé simple et efficace pour confiner les larves au niveau de leur site de ponte 16. Pour cela, une couche visqueuse 14 est déposée sur l'écorce, au niveau des sites de ponte des cicadelles. Pour rappel, les sites de pontes se situent sous l'écorce des rameaux de plant de vigne dont l'âge est compris entre un et quatre ans, de préférence entre deux et trois ans. Chaque hiver les plants de vigne sont taillés de manière à enlever les rameaux en excès et limiter le nombre de nouvelles pousses. Les rameaux de deux ou trois ans se situent donc à la base des rameaux taillés, enlevés ou coupés, ou de ceux laissés en place pour la production de raisin de l'année.

Les figures 1 à 3 illustrent respectivement trois années successives les zones privilégiées d'application de la couche visqueuse 14, après la taille hivernale d'un plant de vigne 2. Les références 18 représentent les coupes des rameaux 20 lors de la taille d'hiver. Selon les choix de taille, la longueur des rameaux 20 peut grandement varier et la zone d'application de la couche visqueuse 14 peut donc être plus ou moins étendue sur chaque rameau 20.

Il est à noter que les figures 1 à 3 illustrent les tailles les plus courantes en France métropolitaine, et ne visent pas à limiter l'application de la couche visqueuse 14 à ces seuls exemples de taille. Autrement dit, en tenant compte de l'explication ci-dessus sur la localisation des sites de ponte 16 des cicadelles, l'homme du métier pourra aisément adapter la zone d'application de la couche visqueuse 14 en fonction du type de taille pratiqué du plant de vigne à traiter.

La couche visqueuse 14 est appliquée entre la période de ponte des cicadelles et avant la période d'éclosion de ses larves. En France métropolitaine, cette période est comprise entre août et avril de l'année suivante. Bien entendu, cette période d'application de la couche visqueuse peut être différente en fonction de la localisation du plant de vigne, comme par exemple en Nouvelle-Zélande où la période d'application est comprise entre avril et octobre.

De préférence, la couche visqueuse est appliquée sur un plant de vigne, après sa taille, afin d'éviter que la couche visqueuse ne colle sur les lames des outils de coupe et avant l'étalement des feuilles pour que le bois soit directement accessible.

La couche visqueuse 14 est déposée avec une épaisseur suffisante pour empêcher les larves de passer à travers la couche visqueuse. Autrement dit, les larves pénètrent dans la couche visqueuse lorsqu'elles atteignent la surface de l'écorce 6. La couche visqueuse est configurée pour gêner le déplacement des larves de sorte que les larves sont piégées dans ladite couche de sorte à ne pas pouvoir traverser ou quitter celle-ci. Ainsi, de façon avantageuse, les larves de cicadelles sont confinées à proximité de leurs sites de ponte 16, au niveau de la surface de l'écorce. La couche visqueuse est appliquée de manière à ce que son épaisseur à la surface de l'écorce est comprise entre 0.05 mm et 2 mm, de préférence entre 0.1 mm et 1 mm. La couche visqueuse peut être appliquée sur l'écorce à l'aide d'un pinceau ou de préférence être pulvérisée à chaud sur l'écorce entre 5°C et 50°C, de préférence entre 10°C et 40°C, au niveau des sites de ponte de la cicadelle décrits ci-dessus.

La couche visqueuse est configurée pour être une fois déposée sur le plant de vigne, formée une substance collante, pâteuse et insoluble dans l'eau. Selon une autre propriété, la couche visqueuse tend à conserver son humidité et sa consistance lorsqu'elle est exposée au soleil.

Selon le présent exemple, la couche visqueuse 14 se caractérise par un comportement non-Newtonien à caractère rhéofluidifiant. La couche visqueuse a une viscosité suffisante pour permettre son adhérence au bois de l'arbre à traiter par quelque moyen d'application que ce soit. A titre d'exemple non limitatif, la couche visqueuse a une viscosité comprise entre 15x10⁴ mPa.s et 40x10⁴ mPa.s.

La couche visqueuse peut être d'origine naturelle, c'est-à-dire formée à partir d'une base d'huile végétale de type ricin, de résines de type colophane, et/ou de cires de type cire d'abeille. La couche visqueuse peut également être d'origine synthétique, issue de dérivés pétroliers comme à partir de polybutène à environ 65%massique et d'environ 35% massique de polyisobutène. Ce type de couche visqueuse est distinct des colles d'os, de peau et apparentées, utilisées pour capturer oiseaux et rongeurs qui ont une pégosité bien supérieure. Ainsi de façon avantageuse, le procédé de traitement selon l'invention ne met pas en danger ce type de faune.

Grâce à l'invention, les larves de cicadelle n'ont plus l'opportunité d'atteindre et de s'alimenter sur le feuillage du plant de vigne ni de transmettre des maladies. En effet, elles sont piégées dans la couche visqueuse dès qu'elles essaient d'émerger de l'écorce et meurent.

Les inventeurs ont constaté que leur procédé de traitement permet d'éliminer de l'ordre de 77% des larves de cicadelles, comparé à un plant de vigne témoin, avec une efficacité minimale de l'ordre de 73%. Il est à noter qu'un traitement au produit phytosanitaire de référence en viticulture biologique, a une efficacité qui oscille entre 5% et 99% dans de rares conditions et avec une moyenne de l'ordre de 60%. Il est alors nécessaire de réaliser au moins trois traitements successifs pour atteindre une efficacité comparable à celle du traitement selon l'invention.

Grâce à l'invention, il n'est plus nécessaire de pulvériser une grande quantité d'insecticide sur le feuillage du plant de vigne pour détruire les larves. Le procédé de traitement selon l'invention est donc plus économe, plus respectueux de la flore et de la faune environnante, tout en étant plus efficace. C'est pourquoi le procédé de traitement selon l'invention est également applicable pour les cultures certifiées biologiques.

## Revendications

1. Procédé de traitement d'un végétal (2) pour empêcher l'émergence de larves à travers l'écorce (6) du végétal (2), mettant en oeuvre une étape d'application d'une couche visqueuse (14) à la surface (12) de l'écorce (6) du végétal (2), de manière à obturer au moins un passage (10) traversant de part en part l'écorce (6).

2. Procédé de traitement selon la revendication précédente, **caractérisé en ce que** la couche visqueuse (14) a une viscosité dynamique comprise entre 15x10⁴ mPa.s et 40x10⁴ mPa.s à une température de 20°C et une pression de 1 Atmosphère.

3. Procédé de traitement selon la revendication précédente, **caractérisé en ce que** la couche visqueuse (14) a une pégosité ou tack suffisante pour permettre son adhérence au bois de l'arbre à traiter par quelque moyen d'application que ce soit.

4. Procédé de traitement selon l'une des revendications précédentes, **caractérisé en ce que** la couche visqueuse (14) est appliquée de manière à ce que son épaisseur à la surface (12) de l'écorce (6), est comprise entre 0.05 mm et 2 mm, de préférence entre 0.1 mm et 1 mm.

5. Procédé de traitement selon l'une des revendications précédentes, **caractérisé en ce que** la couche visqueuse (14) est pulvérisée sur l'écorce (6).

6. Procédé de traitement selon l'une des revendications précédentes, **caractérisé en ce que** la couche visqueuse (14) est appliquée contre l'écorce (6), à une température comprise entre 5 et 50°C, de préférence entre 10 et 40°C.

7. Procédé de traitement selon l'une des revendications précédentes, **caractérisé en ce que** la couche visqueuse (14) est appliquée sur une écorce (6) dont l'âge est compris entre un et quatre ans, de préférence entre deux et trois ans.

8. Procédé de traitement selon l'une des revendications précédentes, **caractérisé en ce que** la couche visqueuse (14) est appliquée après une étape de taille du végétal (2).

9. Procédé de traitement selon l'une des revendications précédentes, **caractérisé en ce que** la couche visqueuse (14) est appliquée entre les périodes de ponte et d'éclosion d'une larve sous l'écorce (6) du végétal (2).

10. Procédé de traitement selon l'une des revendications précédentes, mis en œuvre pour éliminer les larves de cicadelle Scaphoideus titanus.

11. Procédé de traitement selon l'une des revendications précédentes, mis en œuvre sur au moins un plant de vigne (2).

## Patentansprüche

1. Verfahren zum Behandeln einer Pflanze (2) zum Verhindern des Austretens von Larven durch die Rinde (6) der Pflanze (2) hindurch, bei dem ein Schritt des Auftragens einer schleimigen Schicht (14) auf die Oberfläche (12) der Rinde (6) der Pflanze (2) ausgeführt wird, um wenigstens einen die Rinde (6) vollständig durchdringenden Durchgang (10) zu verschießen.

2. Behandlungsverfahren gemäß dem vorangehenden Anspruch, **dadurch gekennzeichnet, daß** die schleimige Schicht (14) eine dynamische Viskosität zwischen 15 x 10⁴ Pas und 40 x 10⁴ Pas bei einer Temperatur von 20 °C und einem Druck von 1 Atmosphäre aufweist.

3. Behandlungsverfahren gemäß dem vorangehenden Anspruch, **dadurch gekennzeichnet, daß** die schleimige Schicht (14) eine hinreichende Klebrigkeit oder einen hinreichenden Tack aufweist, um deren Haften am Holz des zu behandelnden Baums mit jeglichem Anwendungsmittel zu ermöglichen.

4. Behandlungsverfahren gemäß einem der vorangehenden Ansprüche, **dadurch gekennzeichnet, daß** die schleimige Schicht (14) so aufgetragen wird, daß deren Dicke auf er Oberfläche (12) der Rinde (6) zwischen 0,05 mm und 2 mm, vorzugsweise zwischen 0,1 und 1 mm beträgt.

5. Behandlungsverfahren gemäß einem der vorangehenden Ansprüche, **dadurch gekennzeichnet, daß** die schleimige Schicht (14) auf die Rinde (6) gesprüht wird.

6. Behandlungsverfahren gemäß einem der vorangehenden Ansprüche, **dadurch gekennzeichnet, daß** die schleimige Schicht (14) bei einer Temperatur zwischen 5 und 50 °C, vorzugsweise zwischen 10 und 40 °C, aufgetragen wird.

7. Behandlungsverfahren gemäß einem der vorangehenden Ansprüche, **dadurch gekennzeichnet, daß** die schleimige Schicht (14) auf eine Rinde (6) aufgetragen wird, deren Alter zwischen einem und vier Jahren, vorzugsweise zwischen zwei und drei Jahren, beträgt.

8. Behandlungsverfahren gemäß einem der vorangehenden Ansprüche, **dadurch gekennzeichnet, daß** die schleimige Schicht (14) nach einem Schritt des Beschneidens der Pflanze (2) aufgetragen wird.

9. Behandlungsverfahren gemäß einem der vorangehenden Ansprüche, **dadurch gekennzeichnet, daß** die schleimige Schicht (14) zwischen den Zeiträumen des Ablegens und des Ausschlüpfens einer Larve unter der Rinde (6) der Pflanze (2) aufgetragen wird.

10. Behandlungsverfahren gemäß einem der vorangehenden Ansprüche, das zum Vernichten der Larven der Zikade Scaphoideus titanus ausgeführt wird.

11. Behandlungsverfahren gemäß einem der vorangehenden Ansprüche, das an wenigstens einem Weinstock (2) ausgeführt wird.

## Claims

1. A method for treating a plant (2) to prevent the emergence of larvae through the bark (6) of the plant (2), implementing a step of applying a viscous layer (14) on the surface (12) of the bark (6) of the plant (2), in such a way as to fill at least one passage (10) going right through the bark (6).

2. The treatment method according to the preceding claim, **characterized in that** the viscous layer (14) has a dynamic viscosity between 15x10⁴ mPa.s and 40x10⁴ mPa.s at a temperature of 20°C and a pressure of 1 Atmosphere.

3. The treatment method according to the preceding claim, **characterized in that** the viscous layer (14) has a sufficient stickiness or tack to allow its adhesion to the wood of the tree to be treated by any application means.

4. The treatment method according to one of the preceding claims, **characterized in that** the viscous layer (14) is applied in such way that its thickness at the surface (12) of the bark (6) is between 0.05 mm and 2 mm, preferably between 0.1 mm and 1 mm.

5. The treatment method according to one of the preceding claims, **characterized in that** the viscous layer (14) is sprayed on the bark (6).

6. The treatment method according to one of the preceding claims, **characterized in that** the viscous layer (14) is applied against the bark (6), at a temperature between 5 and 50°C, preferably between 10 and 40°C.

7. The treatment method according to one of the preceding claims, **characterized in that** the viscous layer (14) is applied on a bark (6) whose age is between one and four years, preferably between two and three years.

8. The treatment method according to one of the preceding claims, **characterized in that** the viscous layer (14) is applied after a step of pruning of the plant (2).

9. The treatment method according to one of the preceding claims, **characterized in that** the viscous layer (14) is applied between the laying and hatching periods of a larva under the bark (6) of the plant (2).

10. The treatment method according to one of the preceding claims, implemented to eliminate the Scaphoideus titanus leafhopper larvae.

11. The treatment method according to one of the preceding claims, implemented on at least one vine plant (2).
